# EUROPÄISCHE PATENTANMELDUNG

(11) **EP 2 380 709 A2**
(43) Veröffentlichungstag der Anmeldung: **26.10.2011**
(21) Anmeldenummer: 11156685.7
(22) Anmeldetag: 02.03.2011
(51) Int. Cl.: B25J 9/16, G05B 19/4061

(54) **3D-Sicherheitsvorrichtung und Verfahren zur Absicherung und Bedienung mindestens einer Maschine**

(30) Priorität: 22.04.2010 DE 102010017857
(71) Anmelder: Sick AG, 79183 Waldkirch (DE)
(72) Erfinder: Braune, Ingolf, 79194 Gundelfingen (DE)
(74) Vertreter: Hehl, Ulrich

(57) **Zusammenfassung**

Es wird eine 3D-Sicherheitsvorrichtung (10) zur Absicherung und Bedienung mindestens einer Maschine (16) an einem kooperativen Arbeitsplatz (12) mit einem 3D-Sensor (20) zur Erfassung dreidimensionaler Bilddaten des Arbeitsplatzes (12), der Maschine (16) und mindestens einer Bedienperson (14) an dem Arbeitsplatz (12) und mit einer Auswertungseinheit (40, 41, 43) angegeben, die dafür ausgebildet ist, Bewegungsmuster der Bedienperson zu bestimmen und bei Erkennung einer Gefährdung der Bedienperson einen Absicherungsbefehl an die Maschine (16) auszugeben. Dabei ist die Auswertungseinheit (41) dafür ausgebildet, aus den Bewegungsmustern Benutzereingaben an den 3D-Sensor oder an die Maschine abzuleiten.

## Beschreibung

Die Erfindung betrifft eine 3D-Sicherheitsvorrichtung und ein Verfahren zur Absicherung und Bedienung mindestens einer Maschine an einem kooperativen Arbeitsplatz nach dem Oberbegriff von Anspruch 1 beziehungsweise 15.

In der Fertigung industrieller Güter besteht neben der Vollautomation ein weites Feld von teilautomatisierten Lösungen zur Montage. Dabei sind beispielsweise Arbeitsplätze vorgesehen, an denen einige Arbeitsschritte nicht mechanisiert, sondern in Handarbeit ausgeführt werden. Solche Anwendungen werden als hybride Montage bezeichnet und dienen einer Aufgabenteilung zwischen Mensch und automatischen Maschinenfunktionen, um die jeweiligen spezifischen Vorteile zu nutzen: die Maschine mit ihrer Gleichmäßigkeit und Wiederholgenauigkeit von Funktionen und der Mensch mit seinen Anpassungsfähigkeiten an Änderungen und Störungen sowie seinen sensorischen und haptischen Fähigkeiten.

Gerade bei neuen Produkten wird oft mit einer einfachen Handmontage begonnen, welche anschließend weiter automatisiert wird und damit wachsen kann, um die Stückzahl der Nachfrage und dem Lebenszyklus anzupassen. Aber auch in reifen Produktionsstadien gibt es Aufgabenstellungen, welche nur sehr schwierig zu automatisieren sind, so dass Handarbeitsplätze im Fertigungsablauf verbleiben. Diese Kombination findet man beispielsweise in verketteten Montagelinien, wo auf Werkstückträgern ggf. mehrmalige Umläufe zwischen Automatikstationen und Handarbeitsplätzen notwendig sind.

Das Ziel ist jeweils eine flexible Montage in Kombination mit teilautomatischen Lösungen. Teilautomatische Arbeitsschritte, wie Fügeprozesse oder das Auftragen von Kleberaupen, sind aus Gründen der Qualität oder durch die Konstruktion vorgegeben und können bei ihrer Ausführung durch Automatiken Gefahren für den Werker durch Quetsch- oder Scherstellen darstellen. In der gegenwärtigen Praxis erfolgt darum eine Absicherung in Form einer Distanzierung der Bedienperson gegenüber der Gefahrenstelle. Dazu werden häufig optoelektronische Sensoren eingesetzt, wie Sicherheitslichtgitter oder Sicherheitslaserscanner. Der Arbeitsplatz wird entweder von der Bedienperson oder von der Maschine genutzt, und eine direkte Kooperation findet praktisch nicht statt.

Die kooperative Zusammenarbeit von Mensch und Roboter wurde beispielsweise in einem Projekt "Team@work" der Fraunhofergesellschaft demonstriert. Die Sicherheit der Bedienperson wird dabei durch eine Abstandsüberwachung gewährleistet, die mittels mehrerer Kameras den jeweils kürzesten Abstand zwischen Bedienperson und Roboter ermittelt und die Roboterbewegung bei Unterschreiten des sicherheitstechnisch kleinsten zulässigen Abstands anhält. In der DE 10 2004 043 514 A1 umgibt ein Schutzfeld die Maschine, welches an die Bewegung der Maschine angepasst wird.

Diesen Überlegungen ist jedoch gemeinsam, dass die beiden Beteiligte, also Mensch und Maschine, ihre Arbeitsschritte weitgehend unabhängig und parallel nebeneinander ausführen. Eine effektive Kommunikation zwischen Mensch und Maschine und damit eine echte Kooperation fehlt. Die einzige Kommunikationsschnittstelle besteht in Bildschirmen und Schalteinheiten an der Maschine. Mit solchen Schaltern zeigt die Bedienperson den Abschluss einer definierten Tätigkeit an und startet die Bewegung der Maschine. Schaltelemente müssen mit dem Arbeitsplatz mitbewegt oder mehrfach ausgeführt werden, um für die Bedienperson innerhalb des Arbeitsablaufes erreichbar zu bleiben.

Dabei sind an Schnitten im Arbeitsablauf, die einer Interaktion zwischen Mensch und Maschine bedürfen, relativ starre Vorgaben zu erfüllen, um die Sicherheit zu gewährleisten, denn beispielsweise die Übergabe eines Werkstücks erfordert, dass die absichernden Sensoren vorübergehend eine enge Annäherung zwischen Mensch und Maschine tolerieren. Die Absicherung kann sich nicht allein an einem festen Zeitablauf orientieren, weil dies jede Korrektur bei Fehlern der Bedienperson oder des Werkstücks ausschließen würde.

Die Bedienung erzwingt also zusätzliche Arbeitsschritte oder bringt zusätzliche Nachteile mit sich. Bekannt sind Zweihandschalter, deren Betätigung nur so möglich ist, dass sich keine Hand der Bedienperson im Gefahrenbereich befindet. Auch Fußschalter werden eingesetzt, doch verringern sie die Standsicherheit, belasten das Skelett einseitig und stellen mit ihren Zuleitungen Stolperfallen dar. Bildschirme zur Anzeige von Maschineninformationen befinden sich häufig an den Rändern der Maschine, sofern überhaupt erkennbare Darstellungen gegeben sind. Diese Trennung des Interaktionsbereiches am Werkstück und der Informations- und Steuereinrichtungen der Maschine, insbesondere wenn diese die Arbeitsschritte, Einlegerichtungen oder andere notwendige Informationen anzeigen, führt wegen der ständigen Kopfbewegungen und Akkommodation des Auges zur Ermüdung.

Arbeitsplätze an Maschinen oder manuellen Montagestationen müssen einer Reihe von ergonomischen Standards und Richtlinien genügen. Viele Arbeitsplätze besitzen deshalb Verstellmöglichkeiten, etwa für die Anpassung von Sitz- und Greifhöhen. Teilweise ist aber eine individuelle Anpassung von Maschinen gar nicht möglich und der Arbeitsplatz nur für einen durchschnittlichen Menschen ausgelegt. In jedem Fall erfordert die Einstellung ein manuelles Eingreifen. Für die Ausführung von verschiedenen Arbeitsschritten bei größeren Bauteilen oder Halbfertigprodukten kann aber eine unterschiedliche Arbeitshöhe optimal sein, um biomechanische Hebel optimal zu nutzen und eine vorzeitige Ermüdung zu vermeiden. Dann sind auch manuelle Verstellungen zu zeitraubend und umständlich.

Letztlich muss sich demnach der Mensch der Maschine oder den Arbeitsaufgaben anpassen und nicht umgekehrt. Gerade bei Einzelfertigungen werden die notwendigen Nebenzeiten zur Einrichtung des Arbeitsplatzes wegen des hohen Aufwands vermieden. Diese Herangehensweise widerspricht dem Prinzip der Ergonomie und eines gesunden und effektiven Arbeitens.

Es ist bekannt, für die Absicherung einer Maschine gegen Unfälle mit Bedienpersonen mittels einem oder mehreren optischen Sensoren dreidimensionale Bilddaten zu erzeugen und auf deren Basis Gefahrensituationen zu erkennen. Beispielsweise ist in der US 6,297,844 ein optischer Sicherheitsvorhang offenbart, der Bilddaten mit einem stereoskopischen Kamerasystem erzeugt.

Derartige 3D-Sensoren sind meist als Kamera ausgebildet. Ein stereoskopisches Kamerasystem nimmt zwei oder mehr Bilder einer Szenerie aus unterschiedlichem Blickwinkel auf, ordnet Strukturen der verschiedenen Bilder einander zu und trianguliert aus der Disparität, also dem scheinbaren Versatz der Strukturen, und auf Basis der bekannten Perspektiven deren Entfernung. Bei einer Laufzeitkamera wird aktiv ein Lichtsignal ausgesandt und für jeden Pixel beispielsweise mittels Photonmischdetektion die Laufzeit bis zum Empfang des aus der Szenerie remittierten Lichts bestimmt. Wegen der bekannten und konstanten Lichtgeschwindigkeit liefert auch dies eine dreidimensionale Entfernungskarte. Es sind Bildsensoren bekannt, in deren intelligenten Pixel die Laufzeitbestimmung integriert ist.

Aber auch Laserscanner oder Lichtgitter lassen sich zu dreidimensionale Sensoren weiterbilden. Dazu wird der Laserscanner, der üblicherweise nur eine Ebene abtastet, auch in der Senkrechten zu der üblichen Scanbewegung bewegt. Ein Lichtgitter kann tastend ausgebildet werden, besteht also aus entfernungsmessenden Lichttastern anstelle von einfachen Lichtschranken. Zur Entfernungsmessung werden dabei sowohl bei dem Laserscanner als auch bei dem Lichtgitter Lichtlaufzeitverfahren analog dem für eine Laufzeitkamera beschriebenen Verfahren eingesetzt.

All diese Sicherheitseinrichtungen ermöglichen zwar die Überwachung dreidimensionaler Schutzfelder auf unzulässige Eingriffe. Für die Bedienperson ist aber der Schutzbereich nicht erkennbar, und es kommt deshalb immer wieder zu einer unbeabsichtigten Auslösung der Sicherheitseinrichtung. Dies führt zu mitunter erheblichen Produktionsstörungen, da zusätzlich zu dem Zeitverlust durch das Wiederanfahren der Maschine nach einem sicherheitsgerichteten Nothalt auch das Werkstück unbrauchbar wird oder zumindest nachbearbeitet werden muss.

Zur Visualisierung dreidimensionaler Bilddaten sind Datenbrillen oder HMDs (Head Mounted Displays) bekannt. Sie arbeiten zum Teil mit zumindest halbdurchsichtigen Anzeigen, die im Sichtfeld des Anwenders angeordnet werden, um die künstlichen Darstellungen einer natürlichen Szenerie zu überlagern. Eine noch fortschrittlichere Variante sind VRDs (Virtual Retinal Displays), die auf einer Brille sitzen und das Bild direkt auf die Netzhaut projizieren. Diese Art der Visualisierung findet in wissenschaftlichen Studien oder bei Militärpiloten Anwendung, jedoch nicht in der industriellen Fertigung.

Aus der DE 10 2006 048 166 A1 ist ein Mehrkamerasystem zur Beobachtung einer Person in einem industriellen Umfeld bekannt, bei dem fortlaufend ein virtuelles 3D-Modell den aufgenommenen Bilddaten einer Person angepasst wird, um die Position und das Bewegungsverhalten der Person zu ermitteln. Daraus wird ein Gefährdungspotential geschätzt und, wenn dieses eine Schwelle überschreitet, auf die Bewegungssteuerung einer Maschine im Umfeld der Person eingewirkt. Das herkömmliche Kamerasystem gibt der Person keinerlei Möglichkeiten, in Interaktion mit dem Kamerasystem oder der Maschine zu treten. Das Bewegungsverhalten wird ausschließlich im Hinblick auf eine mögliche Gefahrensituation ausgewertet.

Die EP 2 048 557 A1 offenbart einen optoelektronischen Sensor zur Überwachung eines Raumbereichs, bei dem Schutzfelder konfiguriert werden, indem ein besonderes Handgerät entlang der gewünschten Schutzfeldgrenzen in dem Raumbereich geführt wird. Die bereits konfigurierten oder teilkonfigurierten Schutzfelder werden dabei in einer Ausführungsform mit einer Datenbrille angezeigt. Bei dem herkömmlichen Vorgehen ist zum einen das besondere Handgerät erforderlich. Außerdem bezieht sich die Interaktion allein auf den Sensor und eine Konfigurationsphase vor dem eigentlichen Fertigungsbetrieb.

Es ist daher Aufgabe der Erfindung, die Zusammenarbeit zwischen Mensch und Maschine an einem kooperativen Arbeitsplatz bei voller Absicherung gegenüber Unfallgefahren zu verbessern.

Diese Aufgabe wird durch eine 3D-Sicherheitsvorrichtung gemäß Anspruch 1 sowie ein Verfahren zur Absicherung und Bedienung mindestens einer Maschine an einem kooperativen Arbeitsplatz gemäß Anspruch 15 gelöst. Dabei geht die Erfindung von dem Grundgedanken aus, dreidimensionale Bilddaten eines Sicherheitssensors nicht allein für die Absicherung, sondern auch für die Bedienung zu verwenden. Bestimmte Bewegungsmuster der Bedienperson werden erkannt und als Eingabe an den 3D-Sensor oder die Maschine interpretiert und weiterverarbeitet. So wird beispielsweise der 3D-Sensor angewiesen, in einen anderen Modus zu wechseln, einen anderen Sichtwinkel zu wählen, sich zu deaktivieren oder dergleichen. Statt wie herkömmlich Mensch und Maschine durch eine Sicherheitsvorrichtung voneinander zu trennen, wird so eine echte Kooperation erreicht.

Bewegungsmuster sind dabei weit aufzufassen und schließen auch an sich statische Elemente wie eine Pose beziehungsweise eine Körperhaltung ein. Sowohl die Posen als auch die Bewegungen werden mit einem Toleranzspielraum erkannt, weil von einer menschlichen Bedienperson keine identischen Bewegungsabläufe und Körperhaltungen erwartet werden. Die Erkennung eines Bewegungsmusters erfolgt beispielsweise durch Klassifikation, also die gezielte Zuordnung zu einem von mehreren möglichen Bewegungsmustern.

Unter einem kooperativen Arbeitsplatz wird ein Bereich verstanden, in dem mindestens eine Bedienperson und mindestens eine Maschine, wie beispielsweise ein Roboter, eine Montagestation oder dergleichen, gleichzeitig tätig sind, wobei zumindest in einem Teil des Fertigungsprozesses Arbeitsergebnisse zwischen Mensch und Maschine ausgetauscht oder Arbeitsschritte gemeinsam erledigt werden.

Da manche Benutzereingaben sicherheitskritisch oder zumindest prozesskritisch, also entscheidend für das Arbeitsprodukt sind, ist denkbar, dass alle oder manche Bewegungsmuster nur nach einer besonderen Authentifizierung als Benutzereingabe akzeptiert werden. Diese Authentifizierung kann ganz herkömmlich als Eingabe eines Zahlencodes, Passworts oder Lesen einer Zugangskarte realisiert sein. Alternativ werden auch für die Authentifizierung Sensordaten in Form einer Personenerkennung oder eines besonderen Bewegungsmusters zur Freigabe herangezogen.

Die Erfindung hat den Vorteil, dass die Bedienung, also die Mensch-Maschine-Schnittstelle, vollständig mittels 3D-Technik in die sicherheitstechnische Lösung integriert wird. Die Kooperation der Bedienperson mit der Maschine wird als 3D-Schnittstelle aufgefasst. Dadurch ist eine einfache, intuitive Kommunikation für die Bedienperson möglich. Nebenzeiten und Nebentätigkeiten zur Einrichtung und Anpassung des Arbeitsplatzes werden reduziert. Die Produktivität wird erhöht und die ergonomische Anpassungen werden erleichtert. Damit verbessert sich sowohl die Qualität des Produkts als auch die Arbeitszufriedenheit.

Bevorzugt ist eine Anzeigeeinrichtung vorgesehen, insbesondere ein Projektor oder eine Datenbrille, um der Bedienperson ein mit Zusatzinformationen überlagertes Bild des Arbeitsplatzes zu präsentieren, wobei die Zusatzinformationen insbesondere die Darstellung eines Werkstücks, eine vorgesehene Position, Pose oder Bewegung der Bedienperson und/oder ein Schutzfeld umfassen. Die Anzeige erfolgt noch bevorzugter dreidimensional. Die Bedienperson erkennt daraus beispielsweise die notwendige Einlegerichtung für ein Werkstück, ihre eigene dafür vorgesehene Position und Körperhaltung oder die aktuellen Grenzen eines Gefahrenbereichs. Eine Datenbrille ist hier als Stellvertreter für alle HMDs oder ähnliche Anzeigemittel genannt, die mit dem Körper verbunden getragen werden, um dem Auge ein Bild zu präsentieren, das mit dem natürlichen Sichtfeld überlagert werden kann. Die Anzeigeeinrichtung kommuniziert bevorzugt drahtlos mit der Auswertungseinrichtung und ist in einen ohnehin getragenen Schutzhelm oder eine Schutzbrille integriert.

Die Anzeigeeinrichtung ist bevorzugt dafür ausgebildet, Bedienelemente in den Arbeitsplatz einzublenden, insbesondere virtuelle Schalter oder Regler. Der 3D-Sensor erkennt Bewegungsmuster der Bedienperson als Benutzereingabe. Für die Betätigung virtueller Schalter kommt es deshalb letztlich darauf an, ein Körperteil an eine bestimmte Stelle zu bringen und dort gegebenenfalls eine bestimmte Bewegung auszuführen. Diese Bewegung kann eine Geste insbesondere aus dem Fingeralphabet sein. Damit aber auch die Bedienperson weiß, welche Bewegung von ihr erwartet wird, werden diese Bedienelemente dargestellt, so dass die Bedienperson sie beispielsweise über die Positionierung der Hände in dem derart kenntlich gemachten Schalterbereich aktiviert. Herkömmliche Schalter an der Maschine werden dadurch entbehrlich, und die virtuellen Schalter können stets ergonomisch, für die Bedienperson gut erreichbar angezeigt werden. Ein besonders sicherheitsrelevantes Bedienelement ist ein virtueller Notausschalter, der beispielsweise als visueller Ring um einen bestimmten Bereich gezeigt wird. Ebenso denkbar ist ein optischer Zweihandschalter.

Die Auswertungseinheit ist bevorzugt dafür ausgebildet, einen Unterschied zwischen einem Sollzustand und einem Istzustand zu erkennen und mittels der Anzeigeeinrichtung anzuzeigen. Ein Sollzustand ist beispielsweise die erforderliche Art und Form eines Werkstücks, dessen Position und Orientierung, die Position und Körperhaltung der Bedienperson oder deren Bewegungsablauf für einen auszuführenden Arbeitsschritt. Die Anzeige kann als farbliche Markierung erfolgen. Für Farbenblinde ist sowohl die Farbe wählbar als auch eine andere Strukturierung möglich. Die Bedienperson erkennt so rasch, ob mit dem Werkstück oder dem Arbeitsablauf etwas nicht stimmt, und kann dies frühzeitig korrigieren.

Die Auswertungseinheit ist noch bevorzugter dafür ausgebildet, einen Arbeitsschritt der Maschine so lange zu verweigern, bis Sollzustand und Istzustand übereinstimmen. Damit kann eine Qualitätssicherung erfolgen. So wird etwa geprüft, ob das richtige Werkstück in der richtigen Weise eingelegt wurde. Nur dann ist eine Auslösung des nachfolgenden automatischen Arbeitsschrittes möglich. Die Übereinstimmung wird jeweils nur in einem praktisch relevanten Maß gefordert. Eine andere Möglichkeit besteht in einer Überprüfung der Vollständigkeit vor einer Taktauslösung beispielsweise bei Füge- oder Montageaufgaben.

Die Auswertungseinheit ist bevorzugt dafür ausgebildet, als Bewegungsmuster Gesten oder Körperhaltungen, insbesondere Handbewegungen zu erkennen. Beispielsweise werden bestimmte Gesten virtuellen Schaltern zugeordnet. Diese Art, einen Schalter beispielsweise mittels Wischen zu bedienen, kann alternativ oder kumulativ zur Einblendung von Schaltelementen mittels der Anzeigeeinrichtung genutzt werden. Durch eine Gestensteuerung lassen sich analog der Gebärdensprache auch komplexe Befehle geben. Ein Bewegungsmuster ist gegenüber einer Geste der übergeordnete Begriff, weil ein Bewegungsmuster zusätzlich zu Gesten auch einen Positionswechsel und den ganzen Körper einbeziehende Bewegungen umfasst. Je näher die erkannten Bewegungsmuster an aus dem Alltag bekannte Gesten angelehnt sind, desto intuitiver wird die Bedienung. Alle in dieser Beschreibung genannten Gesten sind nur Beispiele, die Erfindung ist darauf nicht beschränkt. Die direkte Interaktion mit der Maschine ermöglicht eine manuelle Handhabung des Werkstückes und damit die Einsparung von Supporteinrichtungen, weil die üblichen Ablagen oder Formteile entfallen können. Das Werkstück wird eingelegt und manuell fixiert und anschließend der Bearbeitungsvorgang durch eine bestimmte Geste ausgelöst, wie eine bestimmte räumliche Handposition für die beiden Hände.

Die Auswertungseinheit ist bevorzugt dafür ausgebildet, Bewegungsmuster für das Heben oder Senken eines Maschinenteils oder die Einstellung eines Abstands zwischen Bedienperson und Maschinenteil zu erkennen und das Maschinenteil entsprechend zu bewegen. Derartige Bewegungsmuster bestehen beispielsweise angelehnt an die Handzeichen eines Einweisers aus einem Herabsenken oder Anheben beider nach unten beziehungsweise nach oben gerichteter Handflächen oder der Anzeige eines Abstands zwischen den zueinander gerichteten Handflächen.

Die Auswertungseinheit ist bevorzugt dafür ausgebildet, Bewegungsmuster zum Auslösen oder Beenden eines automatischen Arbeitsschritts zu erkennen und die Maschine entsprechend zum Ausführen oder Anhalten des Arbeitsschritts anzusteuern, wobei ein Bewegungsmuster insbesondere eine Notausgeste oder eine Körperhaltung zur Bedienung einer virtuellen Zweihandschaltung ist. Dazu dienen beispielsweise Gesten wie der nach oben oder unten gerichtete Daumen oder das zwischen Daumen und Zeigefinger geformte OK-Zeichen. Es kann eine besondere Notfallgeste für einen Nothalt definiert werden, die besonders robust erkennbar und besonders einfach auszuführen sein sollte und zugleich ausschließt, dass die Bedienperson dieses Bewegungsmuster zufällig ausführt. Ein Beispiel ist das abwehrende Vorstrecken beider Hände. Auch ein Zweihandschalter lässt sich als Bewegungsmuster interpretieren. Dabei wird die Position der Hände und möglicherweise auch des Kopfes überwacht, so dass sichergestellt ist, dass zumindest diese Körperteile nicht von dem nachfolgenden Arbeitsschritt gefährdet werden.

Die Auswertungseinheit ist bevorzugt dafür ausgebildet, Bewegungsmuster zum Zurückdrängen eines Maschinenteils zu erkennen und das Maschinenteil entsprechend zu bewegen. Dazu dient ein besonderes Bewegungsmuster, beispielsweise eine Geste analog dem Verscheuchen einer Fliege. Statt also bei Annäherung an die Gefahrenquelle einen Notstopp auszulösen, wird so ermöglicht, das Maschinenteil, etwa eine Achse eines Roboters, zum Zurückweichen zu bewegen. Solange keine Gefährdung erkannt wird und kein Schutzfeld verletzt ist, kann das Zurückziehen des Maschinenteils auch verzögert werden, um zunächst einen automatischen Arbeitsschritt abzuschließen.

Der Unterschied zwischen Verscheuchen und Notstopp kann den Konflikt zwischen Prozesssicherheit und Gefahrensituation lösen. Greift die Bedienperson in den Schutzbereich ein, ist ein Notstopp erforderlich, der zu Qualitätsproblemen führen kann. Der Eingriff erfolgt aber mitunter, um Korrekturen auszuführen. Hierzu kann aufgrund der Verscheuchen-Geste der Teilschritt abschlossen werden, die Achse zieht sich dann zurück, und die Korrektur kann erfolgen. Anschließend wird der Arbeitsschritt mittels einer Startgeste wieder gestartet und abgeschlossen. Hierzu dient ein Heranwinken. Soll die Achse ihre Position ändern, so wird mit dem Zeigefinger in die jeweilige Richtung gewiesen werden. Die Dauer dieser Geste entscheidet dabei über den zurückgelegten Weg.

Die Auswertungseinheit ist bevorzugt für einen Konfigurationsmodus ausgebildet, in dem Bewegungsmuster einer bestimmten Bedienperson eingelernt und Bedienelementen oder Benutzereingaben zugeordnet werden. Dies ist eine Art "3D-Customizing". Durch Anpassung des "look and feel", also der Gestaltungs-, Farb- und Strukturelemente, ist die durch die Erfindung realisierte 3D-Schnittstelle an individuelle Vorlieben der Bedienperson anpassbar. Aber auch individuelle Besonderheiten mit besonders großer Auswirkung auf die Ergonomie, wie Rechts- oder Linkshändigkeit, oder Körpergröße oder körperliche Beeinträchtigungen werden berücksichtigt. Die Bewegungsmuster sind individuell einlernbar, um eine robuste Erkennung und eine für die jeweilige Bedienperson intuitive und einfache Steuerung zu erreichen. Schließlich können bestimmte Steuerungsmöglichkeiten freigeschaltet oder inaktiv gesetzt werden.

Die Auswertungseinheit ist bevorzugt für einen Kalibrierungsmodus ausgebildet, in dem der Arbeitsplatz und die Maschine an die Bedienperson angepasst wird, insbesondere indem die Handhöhe oder die Kopfhöhe bestimmt und daraufhin eine ergonomische Höhenanpassung des Arbeitsplatzes und/oder einer ergonomische Präsentation von Werkstücken durch die Maschine an die Bedienperson erfolgt. Durch diesen Abgleich zwischen der Präsentation des Werkstücks, des Arbeitstisches und der Standfläche der Bedienperson werden Zwangshaltungen vermieden und biomechanische Hebel der Bedienperson optimal genutzt. Da eine Anpassung der Tischhöhe die Werkstücklogistik erschwert, ist alternativ eine Anpassung der Höhe der Standfläche möglich. Die Kalibrierung erfolgt beispielsweise auf Grundlage der Handposition, indem die aktuelle Handhöhe der präsentierten Hände gemessen wird und die Höhenelemente des Arbeitsplatzes darauf abgestimmt werden. Ebenso ist denkbar, die Körpergröße auf Grundlage der Kopfhöhe zu verwenden. Die Kalibrierung kann bei Schichtbeginn erfolgen oder jederzeit aktiviert werden, um eine optimale Anpassung an die Statur der aktuell tätigen Bedienperson sicherzustellen. Auch die Speicherung in einem Nutzerprofil ist möglich.

Nicht nur der Arbeitsplatz an sich, sondern auch die Präsentation der Werkstücke wird so an die Bedienperson angepasst. Gerade bei schweren Werkstücken werden Hebehilfen eingesetzt, es wird mit Robotern interagiert, oder die Montage erfolgt auf rollenden Werkbänken. Dabei sollte sich das Werkstück stets in einer ergonomischen Arbeitshöhe befinden, die von der Bedienperson abhängt und der Sicherheitsvorrichtung aufgrund der Kalibrierung bekannt ist. Wird auch noch die bevorzugte Arbeitshand spezifiziert, so kann die Werkstückpräsentation beispielsweise über einen Anstellwinkel zu der Bedienperson weiter optimiert werden.

Die Auswertungseinheit ist bevorzugt dafür ausgebildet, eine Gefährdung der Bedienperson anhand eines unzulässigen Eingriffs in einen Schutzbereich innerhalb des Arbeitsplatzes zu erkennen. Eine Gefahrensituation wird demnach immer dann erkannt, wenn ein Eingriff in ein Schutzfeld erfolgt. Das erleichtert die Gefahrenerkennung. Von unzulässigen Eingriffen sind zulässige Eingriffe zu unterscheiden, beispielsweise durch die Maschine oder ein Werkstück. Kann die Sicherheitsvorrichtung Schutzfeldeingriffe solchen bekannten Objekten zuordnen und ist ein solcher Schutzfeldeingriff im Prozess vorgesehen, so muss keine Absicherung erfolgen.

Die Schutzbereiche werden dabei noch bevorzugter dynamisch an ein derzeit bearbeitetes Werkstück angepasst. Die dynamische Anpassung berücksichtigt demnach nicht nur das bewegte Maschinenteil, sondern auch das Werkstück, welches beispielsweise aufschwenken könnte. Andererseits ist bei kleinen Werkstücken eine Reduktion des Schutzbereiches möglich, wohingegen ohne Berücksichtigung des Werkstücks das Schutzfeld entsprechend dem Maximalfall auszulegen wäre. Je kleiner die Schutzfelder bei weiterhin garantierter Absicherung sind, desto weniger wird die Bedienperson hierdurch eingeschränkt, und desto weniger unnötige Abschaltungen verringern die Verfügbarkeit.

Die Anzeigeeinrichtung ist bevorzugt dafür ausgebildet, der Bedienperson die Schutzfelder darzustellen. Dies gilt sowohl für eine Konfigurationsphase, in denen Schutzfelder eingerichtet werden, als auch für den eigentlichen Betrieb. Während der Konfiguration, die durch eine eher komplexe Authentifizierungsgeste eingeleitet wird, wird die Hand längs den gewünschten Schutzfeldgrenzen mit einer bestimmten Fingerstellung bewegt. Durch eine weitere Geste, beispielsweise doppeltes Antippen mit dem Zeigefinger, kann eine bestehende Schutzfeldgrenze angewählt und anschließend durch Heranwinken oder Fortschieben beziehungsweise virtuelles Anfassen und Positionieren verändert werden. Dabei gibt die Anzeigeeinrichtung jeweils visuelle Rückmeldung über den Arbeitsfortschritt und die aktuelle Eingabe. Während des Betriebs werden die aktiven Schutzfelder eingeblendet, um versehentliche Eingriffe der Bedienperson zu reduzieren. Gerade bei dynamisch an die aktuelle Situation angepassten Schutzfeldern wäre ohne eine solche Anzeige nicht immer klar, welche Bereiche die Sicherheitsfunktion auslösen, so dass die Bedienperson unnötige Sicherheitsabstände einhält und damit in ihrer Bewegungsfreiheit eingeschränkt wird.

Die Auswertungseinheit ist bevorzugt dafür ausgebildet, Konturen von Objekten, die unzulässig in ein Schutzfeld eingreifen, mittels der Anzeigeeinrichtung optisch hervorzuheben. Dazu wird beispielsweise mit einer Blinkfunktion auf ganze Objekte oder nur Störkonturen hingewiesen, die sich noch im Schutzbereich befinden. Mit diesen klaren Hinweisen lässt sich rasch die Störungsursache einer sicherheitsgerichteten Abschaltung finden und beseitigen, und die Verfügbarkeit verbessert sich.

Die Auswertungseinheit ist bevorzugt dafür ausgebildet, bei Ausgabe eines Abschaltbefehls die dreidimensionalen Bilddaten zu speichern. Damit wird dokumentiert, wie es zu dem Nothalt kommen konnte, um einen Unfallhergang zu rekonstruieren oder den Ablauf zukünftig zu optimieren. Die Bilder können natürlich darüber hinaus auch ständig aufgezeichnet und beispielsweise in einer Sicherheitszentrale visualisiert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung eines kooperativen Arbeitsplatzes mit einer erfindungsgemäßen 3D-Sicherheitsvorrichtung; und
- Fig. 2: eine Darstellung gemäß Figur 1 zu einem anderen Zeitpunkt des Fertigungsablaufs.

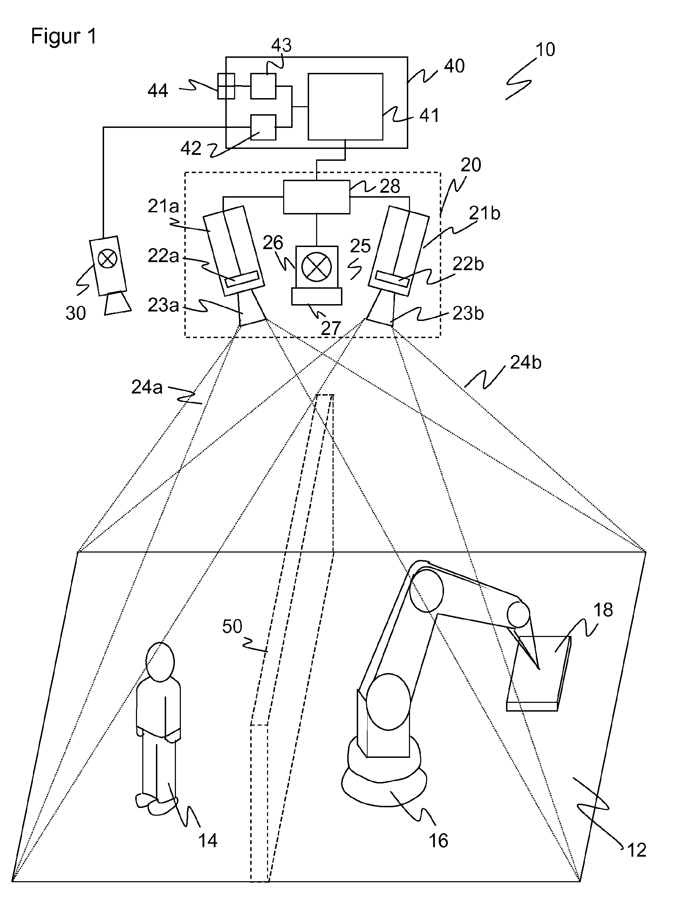

Figur 1 zeigt in einer schematischen dreidimensionalen Darstellung den allgemeinen Aufbau einer erfindungsgemäßen 3D-Sicherheitsvorrichtung 10 an einem kooperativen Arbeitsplatz 12. Dort sind eine Bedienperson 14 und eine Maschine 16, in dem Beispiel ein Roboter, mit einer hybriden Montage befasst, wobei in dem dargestellten Arbeitsschritt die Maschine ein Werkstück 18 bearbeitet.

Die 3D-Sicherheitsvorrichtung 10 weist einen 3D-Sensor 20 auf, der als Stereoskopiekamera ausgebildet ist. Die Erfindung ist aber unabhängig von der Art, mit der dreidimensionale Bilddaten gewonnen werden, und umfasst auch andere 3D-Sensoren einschließlich der einleitend genannten Laserscanner und Lichtlaufzeitkameras. Es ist denkbar, eine zusätzliche, in der Figur 1 nicht dargestellte 2D-Kamera einzusetzen, um ergänzende Bilddaten zu gewinnen, die beispielsweise höher aufgelöst, in einem anderen Spektrum oder aus einer anderen Perspektive aufgenommen werden. Ebenso kann der 3D-Sensor statt vertikal auch seitlich montiert sein.

Die 3D-Sicherheitsvorrichtung 10 ist weiterhin mit einem Projektor 30 ausgerüstet, mit dem visuelle Informationen auf den Arbeitsplatz 12 projiziert werden. Eine Auswertungseinheit 40 ist mit dem 3D-Sensor 20 und dem Projektor 30 verbunden und mit der Steuerung und Auswertung der 3D-Sicherheitsvorrichtung 10 befasst. Durch diese Kombination können sowohl Daten und Informationen dargestellt als auch Steuerbefehle ausgelöst werden. Es können auch mehrere 3D-Sensoren 20 und/oder mehrere Projektoren 30 eingesetzt werden, beispielsweise um einen größeren Arbeitsbereich abzudecken oder schlechte Sicht- und Projektionswinkel beziehungsweise Abschattungen zu kompensieren.

In dem 3D-Sensor 20 sind zwei Kameramodule 21a-b in einem bekannten festen Abstand zueinander montiert und nehmen jeweils Bilder des Arbeitsplatzes 12 auf. In jeder Kamera ist ein Bildsensor 22a-b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 22a-b ist je ein Objektiv 23a-b mit einer abbildenden Optik zugeordnet, welche in der Praxis als jedes bekannte Abbildungsobjektiv realisiert sein können. Der Sichtwinkel dieser Optiken ist in Figur 1 durch gestrichelte Linien dargestellt, die jeweils eine Sichtpyramide 24a, 24b bilden.

In der Mitte zwischen den beiden Bildsensoren 22a-b ist eine Beleuchtungseinheit 25 vorgesehen, wobei diese räumliche Anordnung nur als Beispiel zu verstehen ist und die Beleuchtungseinheit ebenso asymmetrisch oder sogar außerhalb des 3D-Sensors 10 angeordnet sein kann. Diese Beleuchtungseinheit 25 weist eine Lichtquelle 26, beispielsweise einen oder mehrere Laser oder LED sowie ein Mustererzeugungselement 27 auf, das beispielsweise als Maske, Phasenplatte oder diffraktives optisches Element ausgebildet ist. Somit ist die Beleuchtungseinheit 25 in der Lage, den Raumbereich 12 mit einem strukturierten Muster auszuleuchten. Das strukturierte Beleuchtungsmuster erleichtert die stereoskopische Gewinnung von 3D-Bilddaten, sollte aber vorzugsweise für die Bedienperson 14 unsichtbar beispielsweise im infraroten Spektrum liegen. Es sind auch Ausführungsformen mit homogener Beleuchtung oder solche denkbar, die ohne Beleuchtungseinheit 25 allein mit dem Umgebungslicht auskommen.

Mit den beiden Bildsensoren 21a-b ist eine Stereoskopie-Auswertungseinheit 28 verbunden, welche Bilddaten der Bildsensoren 21a-b empfängt und daraus mit Hilfe einer stereoskopischen Disparitätsschätzung dreidimensionale Bilddaten des Arbeitsplatzes 12 berechnet. Das strukturierte Beleuchtungsmuster sorgt dabei für einen guten Kontrast und eine eindeutig zuordenbare Struktur jedes Bildelements des beleuchteten Arbeitsplatzes 12.

Im von dem Sicherheitssensor 10 überwachten Raumbereich 12 können sich bekannte und unerwartete Objekte befinden. Dabei kann es sich beispielsweise wie dargestellt um einen Roboterarm 32, aber auch eine sonstige Maschine, eine Bedienperson und anderes handeln. Der Raumbereich 12 bietet Zugang zu einer Gefahrenquelle, sei es weil es ein Zugangsbereich ist oder weil sich eine gefährliche Maschine, wie der Roboterarm 32, in dem Raumbereich 12 selbst befindet. Um diese Gefahrenquelle abzusichern, können ein oder mehrere virtuelle Schutz- und Warnfelder 34 konfiguriert werden. Sie bilden einen virtuellen Zaun um die gefährliche Maschine 32. Aufgrund der dreidimensionalen Auswertung ist es möglich, Schutz- und Warnfelder 34 dreidimensional zu definieren, so dass eine große Flexibilität entsteht.

Der 3D-Sensor 20 gibt die dreidimensionalen Bilddaten an die Auswertungseinheit 40 aus. In einer Bewegungsmuster-Erkennungseinheit 41 der Auswertungseinheit 40 wird die Bedienperson 14 innerhalb der dreidimensionalen Bilddaten identifiziert und ihre Position, Bewegungsbahn und Körperhaltung bestimmt. Je nach Anforderung der Anwendung werden Gesten und Posen eher grob nur des gesamten Körpers bis hin zu einer feinen Erkennung einzelner Fingerbewegungen aufgelöst. Möglichkeiten der Erkennung von 3D-Bewegungsmustern sind an sich bekannt und beispielsweise in der einleitend genannten DE 10 2006 048 166 A1 sowie der darin zitierten Literatur beschrieben. Beispielsweise wird anhand der aktuellen Bilddaten ein 3D-Modell einer Person parametriert. Durch Klassifizierung bekannter Bewegungsmuster wird dann entschieden, welches Bewegungsmuster die Person derzeit ausführt. Dazu wird häufig nicht nur das aktuelle Bild ausgewertet, sondern auch die Vergangenheit berücksichtigt. Ein bekanntes Verfahren hierfür ist das Objekt-Tracking beispielsweise basierend auf Kalmanfiltern.

Wird ein Bewegungsmuster erkannt, das einem voreingestellten oder eingelernten Bewegungsmuster entspricht, so interpretiert die Auswertungseinheit 40 dies als eine Benutzereingabe analog der Betätigung eines Schalters oder Reglers. Die Auswertungseinheit 40 führt dann den für das Bewegungsmuster vorgesehenen Befehl oder Vorgang aus oder leitet ein entsprechendes Signal an den 3D-Sensor 20, den Projektor 30 oder über eine nicht dargestellte Verbindung, die auch drahtlos oder mittelbar über eine Anlagensteuerung realisiert sein kann, an die Maschine 16 weiter.

Für Befehle an den Projektor 30 ist in der Auswertungseinheit 40 eine Anzeigensteuerung 42 vorgesehen. Damit können Bedienelemente auf den Arbeitsplatz projiziert, Rückbestätigungen für Eingaben und ganz allgemein Daten und Informationen für die Bedienperson 14 visualisiert werden. Eine wichtige Information für die Bedienperson 14 sind Schutzfelder 50, in die aus Sicherheitsgründen nicht eingegriffen werden darf, wobei in Figur 1 beispielhaft eine virtuelle Wand zwischen der Bedienperson 14 und der Maschine 16 als Schutzfeld 50 gezeigt ist.

Diese Schutzfelder 50 werden in einer Schutzfeld-Auswertungseinheit 43 der Auswertungseinheit 40 auf unzulässige Eingriffe ausgewertet. Die Auswertungsregeln können beispielsweise vorschreiben, dass in Schutzfeldern 50 überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Die Schutzfeld-Auswertungseinheit 43 kennt das Bewegungsverhalten der Bedienperson 14 von der Bewegungsmuster-Erkennungseinheit 41. Ganz analog kann auch das Bewegungsmuster der Maschine 16 durch den 3D-Sensor 20 erkannt werden. Alternativ oder zusätzlich stehen für das Bewegungsmuster der Maschine 16 auch die Daten der Maschinensteuerung zur Verfügung. Damit sind hoch flexible Schutzfelder 50 möglich, die an die jeweilige Situation angepasst sind.

Erkennt die Schutzfeld-Auswertungseinheit 43 einen unzulässigen Eingriff in ein Schutzfeld 50, so wird über einen Sicherheitsausgang 44 (OSSD, Output Signal Switching Device) oder ein Sicherheitsnetzwerk die Maschine 16 gestoppt, gebremst oder in eine sichere Position bewegt. Um für sicherheitstechnische Anwendungen geeignet zu sein, ist die Sicherheitsvorrichtung 10 fehlersicher ausgelegt. Dies bedeutet unter anderem, dass der 3D-Sensor 10 und die Auswertungseinheit 40 sich selber, auch in Zyklen unterhalb der geforderten Ansprechzeit, testen kann und dass der Sicherheitsausgang 44 sicher, beispielsweise zweikanalig ausgelegt ist. Ebenso sind auch zumindest alle mit sicherheitsrelevanten Auswertungen Einheiten selbstsicher, werten also zweikanalig aus oder verwendet Algorithmen, die sich selbst prüfen können. Derartige Sicherheitsvorschriften sind für allgemeine berührungslos wirkende Schutzeinrichtungen in der EN 61496-1 bzw. der IEC 61496 normiert sowie in der DIN EN ISO 13849 und EN 61508 normiert. Eine entsprechende Norm für Sicherheitskameras befindet sich in der Vorbereitung. Die Bewegungsmuster-Erkennungseinheit 41 und die Anzeigensteuerung 42 sowie der Projektor 30 müssen nicht notwendig so streng aufgebaut und überwacht werden, da hier ein Ausfall zu keiner Unfallgefahr führt.

Anstelle eines Projektors 30 wird in einer weiteren, nicht dargestellten Ausführungsform eine Datenbrille beziehungsweise ein HMD eingesetzt. Die Datenbrille wird drahtlos von der Anzeigensteuerung 42 angesteuert und stellt die Informationen der Auswertungseinheit 40 der Bedienperson 14 so dar, dass sich das natürliche Bild und die künstlichen Informationen überlagern. Dies geschieht entweder, indem die Datenbrille weiterhin die Sicht auf die Szenerie zulässt, oder indem eine weitere Kamera am Kopf der Bedienperson den Arbeitsplatz 12 aus deren Perspektive aufnimmt und elektronisch zu einer überlagerten dreidimensionalen Ansicht verarbeitet. Dabei können sogar noch zur Erleichterung für die Bedienperson irrelevante Bildelemente ausgeblendet werden, beispielsweise ferne Objekte. Als weiteres Beispiel künstlich veränderter Bilddaten könnte eine gefährdende Bewegung der Maschine 16 optisch vorweggenommen werden, um ein natürliches Zurückweichen der Bedienperson zu erreichen. Für eine korrekte Anzeige der Informationen auf der Datenbrille müssen Position und Blickrichtung der Bedienperson erfasst werden, sei es durch den 3D-Sensor 20 und die Bewegungsmuster-Auswertungseinheit 41 oder unterstützt beziehungsweise ausschließlich durch zusätzliche Sensoren der Datenbrille.

Durch die 3D-Sicherheitsvorrichtung 10 entsteht ein intuitives und einheitliches 3D-Interface, in dem Informationsdarstellung, Bedienungshandlungen, Visualisierung von Arbeitsschritten und die Maschinensicherheit zusammengefasst sind. Bisher eigenständige Elemente werden damit zu einer optimalen Gesamtlösung für eine effektive, sichere und ergonomische Mensch-Maschine-Interaktion integriert, welche zudem die Qualität sichert sowie Nebenzeiten und Nebentätigkeiten reduziert.

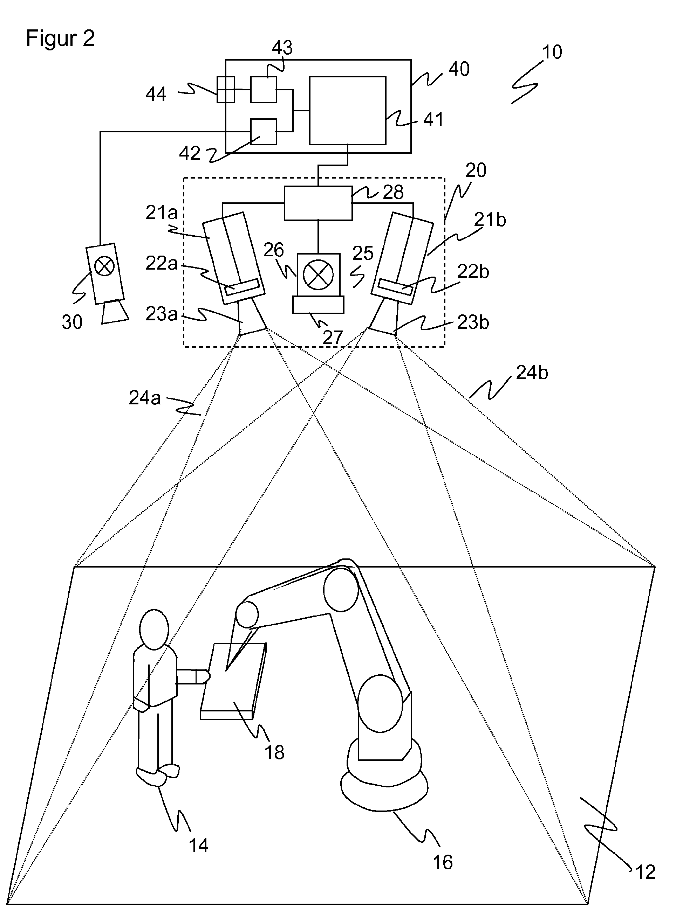

Die Figuren 1 und 2 illustrieren einen Teilaspekt dieser Interaktion. In Figur 1 bearbeitet die Maschine 16 das Werkstück 18, und die Bedienperson ist durch das mauerartige Schutzfeld 50 völlig von der Maschine 16 getrennt. Diese Situation spiegelt das herkömmliche parallele Arbeiten wieder. Erfindungsgemäß ist eine solche Trennung nur für bestimmte Arbeitsschritte vorgesehen, in denen keine Interaktion erforderlich ist oder in denen die maschinelle Bearbeitung so gefährlich ist, dass die Bedienperson größeren Abstand halten muss.

Figur 2 zeigt einen späteren Bearbeitungsschritt. Die automatische Teilbearbeitung des Werkstücks 18 ist abgeschlossen, und die Maschine 16 übergibt das Werkstück 18 an die Bedienperson 14 oder haltert es in bequemer Arbeitshöhe und Position für eine manuelle Bearbeitung oder Inspektion. Das Schutzfeld 50 ist dynamisch angepasst, in diesem Fall so weit, dass es gänzlich verschwunden ist, denn der ruhende Roboterarm stellt keine Gefahrenquelle dar. Die Bedienperson 14 wird nun mit den oben beschriebenen Gesten beispielsweise den Roboterarm zu Positionswechseln, Drehungen oder, nach Abschluss des manuellen Teilschritts, der Fortsetzung der automatischen Bearbeitung veranlassen. Bei allen Maschinenbewegungen wird die Auswertungseinheit 40 entsprechend angepasste Schutzfelder 50 erzeugen.

## Patentansprüche

1. 3D-Sicherheitsvorrichtung (10) zur Absicherung und Bedienung mindestens einer Maschine (16) an einem kooperativen Arbeitsplatz (12) mit einem 3D-Sensor (20) zur Erfassung dreidimensionaler Bilddaten des Arbeitsplatzes (12), der Maschine (16) und mindestens einer Bedienperson (14) an dem Arbeitsplatz (12) und mit einer Auswertungseinheit (40, 41, 43), die dafür ausgebildet ist, Bewegungsmuster der Bedienperson zu bestimmen und bei Erkennung einer Gefährdung der Bedienperson einen Absicherungsbefehl an die Maschine (16) auszugeben,
**dadurch gekennzeichnet,**
**dass** die Auswertungseinheit (41) dafür ausgebildet ist, aus den Bewegungsmustern Benutzereingaben an den 3D-Sensor oder an die Maschine abzuleiten.

2. 3D-Sicherheitsvorrichtung (10) nach Anspruch 1,
die eine Anzeigeeinrichtung (30, 42), insbesondere einen Projektor oder eine Datenbrille aufweist, um der Bedienperson (14) ein mit Zusatzinformationen überlagertes Bild des Arbeitsplatzes (12) zu präsentieren, wobei die Zusatzinformationen insbesondere die Darstellung eines Werkstücks (18), eine vorgesehene Position, Pose oder Bewegung der Bedienperson (14) und/oder ein Schutzfeld (50) umfassen.

3. 3D-Sicherheitsvorrichtung (10) nach Anspruch 2,
wobei die Anzeigeeinrichtung (30, 42) dafür ausgebildet ist, Bedienelemente in den Arbeitsplatz (12) einzublenden, insbesondere virtuelle Schalter oder Regler.

4. 3D-Sicherheitsvorrichtung (10) nach Anspruch 2 oder 3,
wobei die Auswertungseinheit (40) dafür ausgebildet ist, einen Unterschied zwischen einem Sollzustand und einem Istzustand zu erkennen und mittels der Anzeigeeinrichtung (30) anzuzeigen.

5. 3D-Sicherheitsvorrichtung nach Anspruch 4,
wobei die Auswertungseinheit (40) dafür ausgebildet ist, einen Arbeitsschritt der Maschine (16) so lange zu verweigern, bis Sollzustand und Istzustand übereinstimmen.

6. 3D-Sicherheitsvorrichtung (10) nach einem der vorhergehenden Ansprüche,
wobei die Auswertungseinheit (40, 41) dafür ausgebildet ist, als Bewegungsmuster Gesten oder Körperhaltungen, insbesondere Handbewegungen zu erkennen.

7. 3D-Sicherheitsvorrichtung (10) nach einem der vorhergehenden Ansprüche,
wobei die Auswertungseinheit (40, 41) dafür ausgebildet ist, Bewegungsmuster für das Heben oder Senken eines Maschinenteils (16) oder die Einstellung eines Abstands zwischen Bedienperson (14) und Maschinenteil (16) zu erkennen und das Maschinenteil (16) entsprechend zu bewegen.

8. 3D-Sicherheitsvorrichtung (10) nach einem der vorhergehenden Ansprüche,
wobei die Auswertungseinheit (40, 41) dafür ausgebildet ist, Bewegungsmuster zum Auslösen oder Beenden eines automatischen Arbeitsschritts zu erkennen und die Maschine (16) entsprechend zum Ausführen oder Anhalten des Arbeitsschritts anzusteuern, wobei ein Bewegungsmuster insbesondere eine Notausgeste oder eine Körperhaltung zur Bedienung einer virtuellen Zweihandschaltung ist.

9. 3D-Sicherheitsvorrichtung (10) nach einem der vorhergehenden Ansprüche,
wobei die Auswertungseinheit (40, 41) dafür ausgebildet ist, Bewegungsmuster zum Zurückdrängen eines Maschinenteils (16) zu erkennen und das Maschinenteil (16) entsprechend zu bewegen.

10. 3D-Sicherheitsvorrichtung (10) nach einem der vorhergehenden Ansprüche,
wobei die Auswertungseinheit (40, 41) für einen Konfigurationsmodus ausgebildet ist, in dem Bewegungsmuster einer bestimmten Bedienperson (14) eingelernt und Bedienelementen oder Benutzereingaben zugeordnet werden.

11. 3D-Sicherheitsvorrichtung (10) nach einem der vorhergehenden Ansprüche,
wobei die Auswertungseinheit (40) für einen Kalibrierungsmodus ausgebildet ist, in dem der Arbeitsplatz (12) und die Maschine (16) an die Bedienperson (14) angepasst wird, insbesondere indem die Handhöhe oder die Kopfhöhe bestimmt und daraufhin eine ergonomische Höhenanpassung des Arbeitsplatzes (12) und/oder einer ergonomische Präsentation von Werkstücken (18) durch die Maschine (16) an die Bedienperson (14) erfolgt.

12. 3D-Sicherheitsvorrichtung (10) nach einem der vorhergehenden Ansprüche,
wobei die Auswertungseinheit (40, 43) dafür ausgebildet ist, eine Gefährdung der Bedienperson (14) anhand eines unzulässigen Eingriffs in einen Schutzbereich (50) innerhalb des Arbeitsplatzes (12) zu erkennen und insbesondere die Schutzbereiche (50) dynamisch an ein derzeit bearbeitetes Werkstück (18) anzupassen, und wobei die Anzeigeeinrichtung (30, 42) dafür ausgebildet ist, der Bedienperson (14) die Schutzfelder (50) darzustellen.

13. 3D-Sicherheitsvorrichtung (10) nach Anspruch 12,
wobei die Auswertungseinheit (40, 42) dafür ausgebildet ist, Konturen von Objekten, die unzulässig in ein Schutzfeld (50) eingreifen, mittels der Anzeigeeinrichtung (30) optisch hervorzuheben.

14. 3D-Sicherheitsvorrichtung (10) nach einem der vorhergehenden Ansprüche,
wobei die Auswertungseinheit (40, 42) dafür ausgebildet ist, bei Ausgabe eines Abschaltbefehls die dreidimensionalen Bilddaten zu speichern.

15. Verfahren zur Absicherung und Bedienung mindestens einer Maschine (16) an einem kooperativen Arbeitsplatz (12), wobei mit einem 3D-Sensor (20) dreidimensionale Bilddaten des Arbeitsplatzes (12), der Maschine (16) und mindestens einer Bedienperson (14) an dem Arbeitsplatz (12) erfasst und Bewegungsmuster der Bedienperson (14) bestimmt werden, wobei bei Erkennung einer Gefährdung der Bedienperson (14) ein Absicherungsbefehl an die Maschine (16) ausgegeben wird,
**dadurch gekennzeichnet,**
**dass** aus den Bewegungsmustern Benutzereingaben an den 3D-Sensor (20) oder an die Maschine (16) abgeleitet werden.
